# EUROPÄISCHE PATENTSCHRIFT

(11) **EP 0 603 616 B1**
(45) Veröffentlichungstag und Bekanntmachung des Hinweises auf die Patenterteilung: **27.05.1998**
(21) Anmeldenummer: 93119577.0
(22) Anmeldetag: 04.12.1993
(51) Int. Cl.: F02M 47/02, F02M 45/08

(54) **Brennstoffeinspritzventil**
Fuel injection valve
Soupape d'injection de combustible

(30) Priorität: 23.12.1992 CH 3914/92
(43) Veröffentlichungstag der Anmeldung: 29.06.1994
(60) Teilanmeldung: 97119131.7
(73) Patentinhaber: GANSER-HYDROMAG AG, 8001 Zürich (CH)
(72) Erfinder: Ganser, Marco A., CH-8001 Zürich (CH)
(74) Vertreter: Patentanwälte Schaad, Balass, Menzl & Partner AG

(56) Entgegenhaltungen:
- EP-A- 0 119 894
- EP-A- 0 393 590
- WO-A-87/03339
- DE-C- 4 101 235

## Beschreibung

Die vorliegende Erfindung betrifft ein Brennstoffeinspritzventil zur intermittierenden Brennstoffzufuhr in den Brennraum einer Verbrennungskraftmaschine gemäss Oberbegriff des Anspruchs 1. Ein solches Brennstoffeinspritzventil ist besonders geeignet zur direkten Einspritzung des Brennstoffs in den Verbrennungsraum jedes Zylinders der Verbrennungskraftmaschine und kann mit Vorteil bei Dieselmotoren verwendet werden.

Brennstoffeinspritzventile mit indirekter elektromagnetischer Steuerung der Düsennadel des Brennstoffeinspritzventils werden beispielsweise in den nachfolgenden Schriften offenbart: US-A-4,566,416, EP-A-0 228 578 und EP-A-0 262 539. Bei diesen bekannten Brennstoffeinspritzventilen wird gleich wie beim Brennstoffeinspritzventil gemäss der vorliegenden Erfindung die Düsennadel über einen hydraulischen Verstärker elektromagnetisch indirekt betätigt. Der Brennstoffdruck in einem Steuerraum beaufschlagt einen Nadelkolben und hält die Düsennadel geschlossen. Der Steuerraum ist über eine erste Drosselbohrung mit der Hochdruckzufuhrleitung des Brennstoffeinspritzventils verbunden und kann über eine zweite Drosselbohrung entlastet werden. Der Austritt dieser zweiten Drosselbohrung wird von einem elektromagnetisch betätigten Pilotventil geöffnet und geschlossen. Wird das Pilotventil betätigt, so wird die zweite Drosselbohrung geöffnet. Dabei sinkt wegen der ersten Drosselbohrung der Druck im Steuerraum ab. Dadurch entsteht eine auf die Düsennadel wirkende Kraft in Oeffnungsrichtung der Düsennadel und der Einspritzvorgang beginnt. Wird das Pilotventil wieder geschlossen, baut sich der Druck im Steuerraum erneut auf, die Düsennadel wird geschlossen und der Einspritzvorgang demzufolge beendet. Brennstoffeinspritzventile dieser Art sind somit geeignet, um intermittierende Einspritzungen zu erzeugen, wie sie beispielsweise bei Dieselmotoren notwendig sind.

Die maximalen Einspritzdrücke dieser Einspritzventile betragen bis über 1000 bar. Die minimalen Einspritzdrücke bewegen sich zwischen 100 und 300 bar. Mit dem oberen Einspritzdruckbereich kann der Motor unter Last und bis zur Vollast betrieben werden, wogegen mit dem unteren Druckbereich der Motor im Leerlauf sowie bei sehr niedriger Last betrieben wird.

Um gute Leistungs- und Abgaswerte des Motors zu erzielen, muss unter Last und bei hoher Drehzahl des Motors die Einspritzdauer kurz sein. Diese beträgt üblicherweise etwa 1/1000 Sekunde. Die in diesen Betriebspunkten eingespritzte Menge ist wesentlich grösser als im Leerlauf des Motors. Im Leerlauf ist die benötigte Brennstoffmenge pro Arbeitstakt dagegen recht klein, da nur die Reibung des Motors überwunden werden muss und am Abtrieb der Kurbelwelle keine Leistung abgegeben wird. Zudem ist die Drehzahl des Motors niedrig. Um im Leerlauf und bei niedriger Last einen harten, lauten Gang des Motors zu vermeiden, ist es erwünscht, dass die Einspritzdauer, trotz der kleinen Einspritzmenge, relativ lang ist, typischerweise soll sie wiederum 1/1000 bis 2/1000 einer Sekunde betragen.

Da die Einspritzmenge klein ist, ist es mit den Brennstoffeinspritzventilen bekannter Art schwierig, eine lange Einspritzdauer zu erzeugen und es ist folglich schwierig, einen leisen, ruhigen Motorleerlauf zu erzielen.

Bei einem ähnlichen Brennstoffeinspritzventil mit den Merkmalen des Oberbegriffes des Anspruches 1 macht das Einspritzventilglied während jedem Einspritzvorgang eine zweistufige Oeffnungsbewegung (EP-A-0 393 590). Hiezu ist im Gehäuse ein gegen die Kraft einer Feder verschiebbares Anschlagelement angeordnet, gegen das sich bei einer Absenkung des Brennstoffdruckes im Steuerraum das Einspritzventilglied um eine erste Wegstrecke bis zum Anschlag bewegt. Anschliessend wird in einem zweiten Schritt das Einspritzventilglied zusammen mit dem Anschlagelement weiter um eine zweite Wegstrecke bewegt.

Aufgabe der vorliegenden Erfindung ist es, ein verbessertes Brennstoffeinspritzventil der eingangs genannten Art von einfachem Aufbau vorzuschlagen, bei welchem die Oeffnungsbewegung des Einspritzventilgliedes bei niedrigem (z.B. 200 bar) und mittlerem (z.B. 300 bis 500 bar) Einspritzdruck begrenzt bleibt und dadurch eine kleine Einspritzmenge bei langer Einspritzdauer eingespritzt werden kann, wogegen bei hohem Einspritzdruck (z.B. 1000 bar oder mehr) die Oeffnungsbewegung des Einspritzventilgliedes wesentlich rascher und der Oeffnungsweg des Einspritzventilgliedes wesentlich grösser sind als bei niedrigem bis mittlerem Druck, und dadurch eine grosse Einspritzmenge bei kurzer Einspritzdauer eingespritzt werden kann.

Diese Aufgabe wird gelöst mit einem Brennstoffeinspritzventil mit den Merkmalen des Anspruches 1.

Das Einspritzventilglied des Brennstoffeinspritzventils wird bei niedrigen und mittleren Einspritzdrücken, gegeben durch die Druckabsenkung im Steuerraum, nur einen ersten Weg oder Hub weg vom Ventilsitz ausführen, bis das mit einer starken Feder vorgespannte, auf einer Anschlagfläche ruhende Anschlagelement erreicht wird. Die Federvorspannkraft ist so gross, dass das Anschlagelement bis zu einem mittleren Druckpegel nicht bewegt wird. Bei hohem Einspritzdruck erzeugt die Druckabsenkung im Steuerraum dagegen eine genügend grosse Kraft, um das Anschlagelement und das Einspritzventilglied bis zu einem gehäusefesten Anschlag zu bewegen, wobei ein zweiter Hub stattfindet und damit eine grosse Einspritzmenge bei kurzer Einspritzdauer eingespritzt werden kann.

Dadurch ist es möglich erstens einen weichen Gang im Leerlauf und bei niedriger Last zu erzielen und zweitens die Forderung der guten Leistungs- und Abgaswerte unter Belastung und bei hoher Motordrehzahl einzuhalten.

Es sind bereits Brennstoffeinspritzventile bekannt, bei denen die Oeffnungsbewegung des Einspritzventilgliedes in zwei Stufen erfolgt und durch einen gehäusefesten Anschlag begrenzt wird (US-A-5,165,607). Diese Brennstoffeinspritzventile unterscheiden sich jedoch vom Aufbau und der Wirkungsweise her vom erfindungsgemässen Brennstoffeinspritzventil.

Ausführungsbeispiele des Erfindungsgegenstandes werden nachfolgend anhand der Zeichnungen näher erläutert. Es zeigen rein schematisch:
- Figur 1: ist eine asiale Schnittzeichnung eines elektromagnetisch gesteuerten Brennstoffeinspritzventils gemäss der vorliegenden Erfindung;
- Figur 2: ist ein vergrösserter, partieller Ausschnitt von Figur 1, der die spezifischen Merkmale zur Realisation des gewünschten Hubverlaufes detailliert zeigt;
- Figur 3: ist eine axiale Schnittzeichnung einer zweiten Ausführungsvariante eines Brennstoffeinspritzventils gemäss der vorliegenden Erfindung
- Figur 3a: ist eine vergrösserte Ansicht von oben eines Hubanschlagelementes des Brennstoffeinspritzventils von Figur 3
- Figur 3b: ist eine Schnittzeichnung des Hubanschlagelementes entlang der Linie A-A von Figur 3a, und
- Figur 4: ist ein Diagramm, das zeigt, wie die Hubverläufe der Brennstoffeinspritzventile der vorliegenden Erfindung bei relativ niedrigem bis mittlerem sowie bei hohem Einspritzdruck verlaufen.

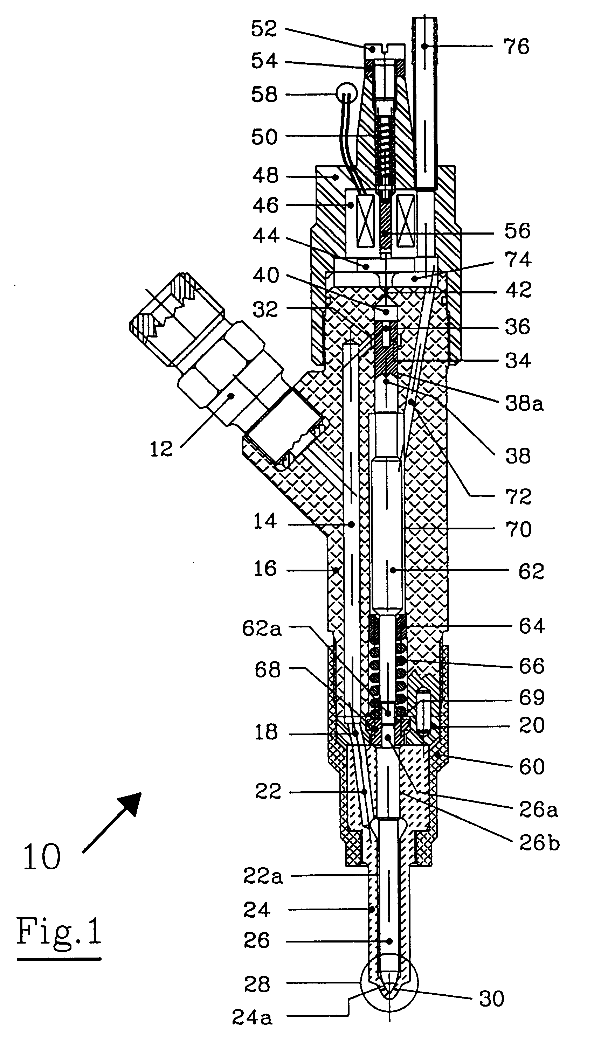

Zurückkommend auf Figur 1, welche eine Schnittzeichnung eines Brennstoffeinspritzventils 10, gemäss der vorliegenden Erfindung zeigt, gelangt der unter Druck stehende Brennstoff über einen Zufuhrstutzen 12 in eine Längsbohrung 14, welche im Ventilgehäuse 16 angebracht ist. Die Bohrung 14 erstreckt sich nach unten bis zu einer Zwischenplatte 20 und mündet in eine in der Zwischenplatte 20 angefertigten Bohrung 18. Die Bohrung 18 mündet in eine Bohrung 22, welche mit einer Ringbohrung 22a verbunden ist, die sich in der Düsennspitze 24 befindet. Die Ringbohrung 22a erstreckt sich in der Düsenspitze 24 bis zum Sitz 24a der Zerstäuberdüse 28, welcher sich zwischen der Düsenspitze 24 und der Spitze der Düsennadel 26 befindet.

Die Zerstäuberdüse 28 ist als sogenannte Sitzlochdüse ausgeführt. In einer derartigen Anordnung der Zerstäuberdüse 28 münden die Einspritzbohrungen 30 an der Innenseite direkt in den Sitz 24a, welcher von der Düsennadelspitze geschlossen wird, wenn keine Einspritzung stattfinden soll. Diese Anordnung weist den spezifischen Vorteil auf, dass unter Voraussetzung eines ausreichenden Brennstoffdruckes in der Ringbohrung 22a, die Zerstäuberdüse 28 bereits bei sehr geringem Hub der Düsennadel 26 eine gute Zerstäubung im Verbrennungsraum der dazugehörigen Verbrennungskraftmaschine (nicht gezeigt) erzeugt. Dies wirkt sich, wie oben erwähnt, günstig auf das Betriebsverhalten des Motors aus.

In Figur 1 wird die Sitzlochdüse als Beispiel einer Zerstäuberdüse 28 gezeigt, welche bereits bei sehr geringem Hub der Düsennadel 26 eine gute Brennstoffzerstäubung aufweist. Weitere Anordungen der Zerstäuberdüse 28 sind im Zusammenhang mit der vorliegenden Erfindung verwendbar. Um die Vorteile der vorliegenden Erfindung optimal auszunützen, ist es jedoch zweckmässig, dass Zerstäuberdüsen verwendet werden, die bereits bei sehr geringem Hub der Düsennadel eine gute Umsetzung der Druckenergie zur Erzeugung kleiner, fein verteilter Brennstofftröpfchen in den Brennraum des Motors gewährleisten.

Nach oben erstreckt sich die Bohrung 14 bis zu einer Ringnute 32, welche mittels der Drosselbohrung 34 und einer Längsbohrung 36, beide im Nadelkolben 38 angefertigt, mit dem Steuerraum 40 verbunden ist. Eine zweite Drosselbohrung 42 mündet einerseits in den Steuerraum 40. Auf der andern Seite wird die Drosselbohrung 42 von einer elektromagnetisch betätigbaren Pilotnadel 44 geschlossen gehalten. Die Pilotnadel 44 kann mittels dem Elektromagnet 46 von der Auslassseite der Drosselbohrung 42 wegbewegt werden.

Der Magnet 46 wird mit einer Mutter 48 an das Ventilgehäuse 16 verschraubt. Ferner sind in Figur 1 eine Steuerfeder 50, eine Steuerfederschraube 52 und eine Steuerfederhülse 54 ersichtlich. Der Schaft 56 der Pilotnadel 44 wird auf der Längsachse des Einspritzventils 10 im Innern des Magnets 46 geführt. Die Rückstellkraft der Steuerfeder 50 wirkt auf das obere Ende des Schaftes 56 der Pilotnadel 44 ein. Diese Kraft kann durch Wahl der Dicke der Federhülse 54 auf den gewünschten Wert eingestellt werden. Der Elektromagnet 46 wird über die elektrischen Anschlusskabel 58 mit elektrischen Stromimpulsen einer vorbestimmten Dauer versorgt.

Die Düsenspitze 24 wird mittels einer Ueberwurfmutter 60 an das Ventilgehäuse 16, zusammen mit der Zwischenplatte 20, auf dichte Weise verschraubt. Die Düsennadel 26 weist am oberen Ende eine dünnere Verlängerung 26a auf, auf dessen Ende die untere Verlängerung 62a des Nadelstempels 62 drückt. Der Nadelstempel 62 weist an seinem oberen Ende besagten Nadelkolben 38 auf und ist als integrales Teil mit diesem Nadelkolben 38 verbunden.

Der Nadelkolben 38 weist zusammen mit dem Ventilgehäuse 16 eine Führung 38a mit einer eng tolerierten Gleitpassung auf. Das Spiel dieser Gleitpassung beträgt typischerweise 2 - 4 Mikrometer. Die Düsennadel 26 weist zusammen mit der Düsenspitze 24 ebenfalls eine Führung mit enger Gleitpassung 26b auf. Das Spiel dieser engen Führung beträgt typischerweise auch 2 - 4 Mikrometer. Zwischen diesen beiden Führungen 26b und 38a befindet sich ein Raum 70, in welchem ein wesentlich tieferer Druck herrscht als in den vorhin erläuterten Brennstoffdurchgängen. Dieser Raum 70 ist über eine Bohrung 72 im Ventilgehäuse 16 mit einem weiteren Raum 74, in dem sich die Pilotnadel 44 befindet, verbunden. Leckbrennstoff, welcher vom Steuerraum 40 über die Führung 38a und von der Ringbohrung 22a über die Führung 26b in den Raum 70 gelangt, wird durch die Bohrung 72 in den Raum 74 evakuiert. Vom Raum 74 fliesst dieser Brennstoff, zusammen mit jenem Brennstoff, der von der Drosselbohrung 42 während jeder Einspritzung in den Raum 74 entlastet wird, über einen Abflussnippel 76 zurück zum Brennstofftank (nicht gezeigt).

Ferner sind im unteren Teil des Ventilgehäuses 16 eine Nadelfederscheibe 64, eine Nadelfeder 66 und ein Hubanschlagelement 68 ersichtlich. Durch Wahl der Dicke der Nadelfederscheibe 64 kann die Vorspannkraft der Nadelfeder 66 auf einen gewünschten Wert gebracht werden.

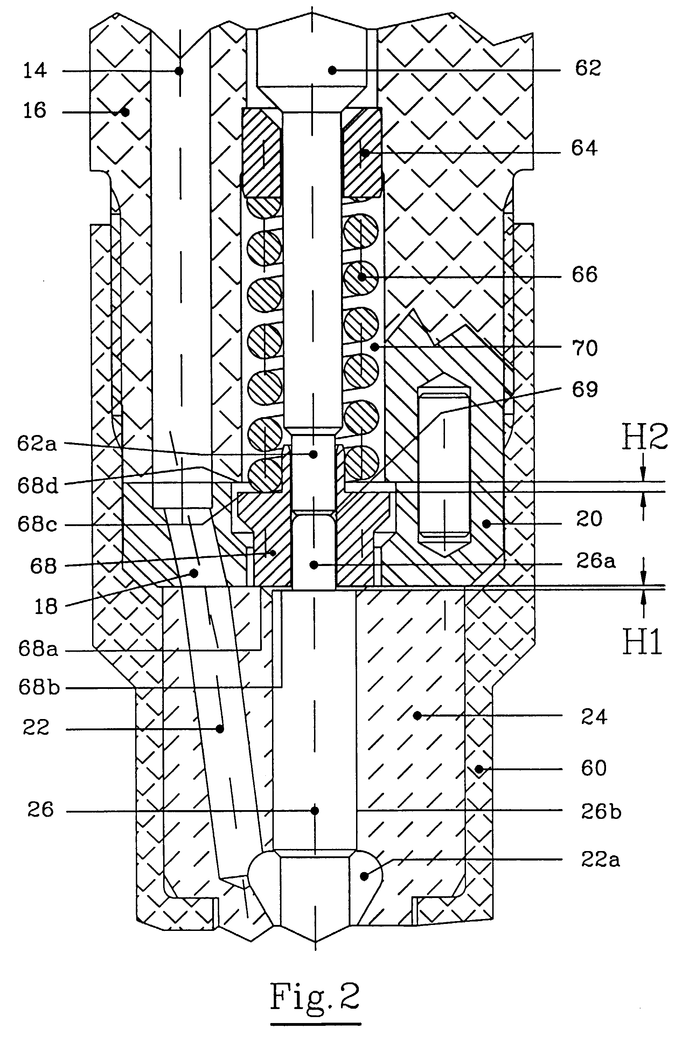

Die eben beschriebenen Elemente sowie weitere schon früher beschriebene Elemente des Brennstoffeinspritzventils 10 werden in der Figur 2 ebenfalls gezeigt. Figur 2 ist ein vergrösserter, partieller Ausschnitt von Figur 1, der die spezifischen Merkmale zur Realisation des gewünschten Hubverlaufes während der Einspritzung, gemäss der vorliegenden Erfindung, detailliert zeigt.

Wenn keine Einspritzung stattfindet, d.h. wie in den Figuren 1 und 2 gezeigt, im geschlossenen Zustand der Düsennadel 26, ruht das Hubanschlagelement 68 auf einer Anschlagfläche 68a. Zwischen dieser ebenen, unteren Anschlagfläche 68a des Hubanschlagelementes 68 und der oberen, ebenen Fläche 68b der Düsennadel 26 ist ein erster freier Weg Hl vorhanden (vgl. Figur 2).

Der Nadelstempel 62 drückt mit seiner Verlängerung 62a, gegeben durch den Druck im Steuerraum 40, auf die Verlängerung 26a der Düsennadel 26 und hält diese somit sicher in ihrer geschlossenen Lage auf dem Ventilsitz 24a. Die Verlängerung 62a könnte sich auch bis zur oberen, ebenen Fläche 68b der Düsennadel 26 erstrecken. Damit würde die Verlängerung 26a der Düsennadel 26 entfallen.

Zwischen der oberen, ebenen Anschlagfläche 68c des Hubanschlagelementes 68 und der dazugehörigen Fläche 68d des Ventilgehäuses 16 ist ein zweiter freier Weg H2 vorhanden.

Die Funktionsweise des Brennstoffeinspritzventils 10 ist nun bei niedrigem (z.B. 200 bar) und mittlerem (z.B. 400 bar) Druckpegel, wie folgt: bei diesem für den Leerlauf und die niedrige Motorlast massgebenden Betriebszustand wird die Düsennadel 26 während dem gesamten Einpritzvorgang nur einen Hub gleich dem Weg H1 zurücklegen. Zu diesem Zweck wird zu einem gewünschten Zeitpunkt der Elektromagnet 46 mit einem Stromimpuls von vorgegebener Dauer erregt. Die Pilotnadel 44 wird entgegen der Kraft der Steuerfeder 50 von der Drosselbohrung 42 wegbewegt. Dadurch, sowie wegen der Drossel 34, sinkt der Druck im Steuerraum 40 rasch ab. Der Druck im Ringraum 22a, der auf den Führungskolben 26b der Düsennadel 26 einwirkt, ist nun in der Lage, die Düsennadel 26 zu öffnen, womit die Einspritzung beginnt.

Die Verlängerungen 26a und 62a bewegen sich dabei im Innern der auf der Längsachse des Brennstoffeinspritzventils 10 angeordneten Längsbohrung 69 des Hubanschlagelementes 68. Das Hubanschlagelement 68 ruht dagegen auf der unteren Anschlagfläche 68a.

Nachdem die Düsennadel 26 den ersten Weg oder Hub H1 zurückgelegt hat, gerät der Anschlag 68b in Kontakt mit dem Anschlag 68a. Die Kraft der Feder 66 ist so gross, dass die hydraulische Druckkraft, welche die Düsennadel 26 weiter öffnen möchte, nicht ausreicht, um diese Federkraft zu überwinden. Die Düsennadel 26 wird also nur den ersten Hub H1 ausführen.

Bei diesem geringen ersten Hub H1 wird die effektive Durchflussfläche der Spritzbohrungen 30 eingeschnürt, wodurch eine geringe Einspritzmenge bei langer Einspritzdauer dem Motorbrennraum (nicht gezeigt) zugeführt wird. Wird der Stromimpuls zum Elektromagnet 46 beendet, wird die Pilotnadel 44 von der Steuerfeder 50 auf die Drosselbohrung 42 zurückgeschoben, und schliesst diese ab. Im Steuerraum 40 baut sich der Druck auf und die hydraulische Druckkraft im Steuerraum 40 wird nun die Düsennadel 26 schliessen und die Einspritzung beenden.

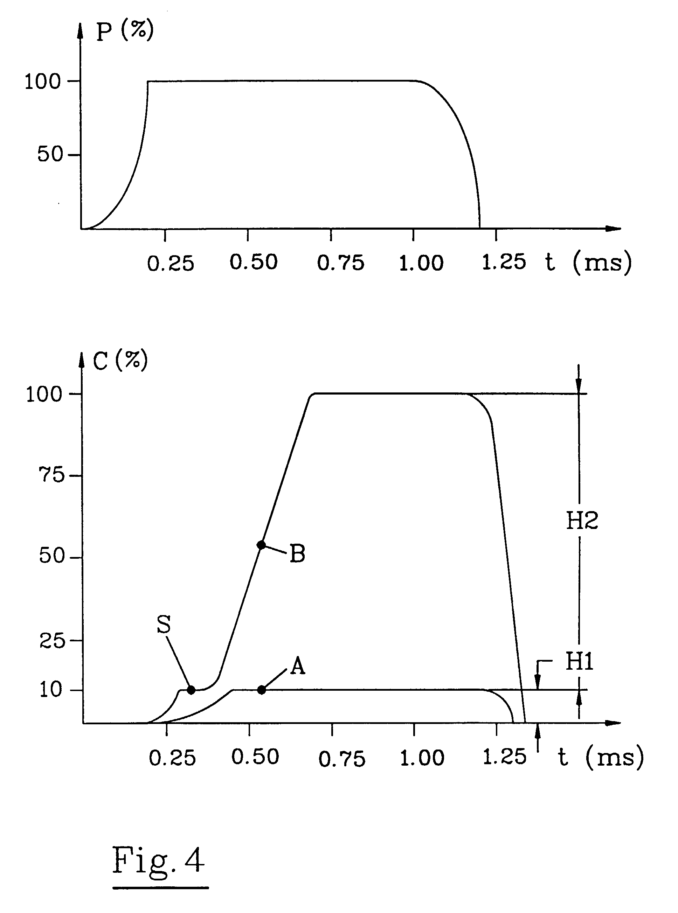

Der Verlauf des ersten Hubes H1 der Düsennadel 26 ist als Ordinate C in Funktion der Zeit t in Figur 4 mit dem Verlauf A dargestellt worden.

Bei hohem Einspritzdruck (z.B. 1000 bar) ist die grundsätzliche Funktionsweise des Brennstoffeinspritzventils 10 ähnlich wie bei niedrigem und mittlerem Einspritzdruck. Es muss hier beachtet werden, dass die hydraulische Druckkraft, welche wegen Druckabsenkung im Steuerraum 40 in Oeffnungsrichtung der Düsennadel 26 wirkt, bei zunehmendem Einspritzdruck ebenfalls zunimmt.

Wird nun bei hohem Einspritzdruck (z.B. 1000 bar) der Elektromagnet 46 mit einem Stromimpuls von vorgegebener Dauer erregt, so bewegt sich wiederum die Pilotnadel 44 von der Drosselbohrung 42 weg, womit der Druck im Steuerraum 40 absinkt. Die Düsennadel 26 wird von der hydraulischen Druckkraft geöffnet und durchläuft rasch den ersten Hub H1. Nach Berührung der ebenen Flächen 68b und 68a ist nun die grössere hydraulische Druckkraft in der Lage, das Hubanschlagelement 68 entgegen der Kraft der Feder 66 zu bewegen, bis die Anschlagfläche 68c die Fläche 68d des Ventilgehäuses 16 berührt, womit der zweite, grössere Hub H2 zusätzlich zum ersten Hub H1 zurückgelegt wird.

Wird der Stromimpuls zum Elektromagnet 46 beendet und folglich, nach dem Schliessen der Drosselbohrung 42 durch die Pilotnadel 44, der Druck im Steuerraum 40 erneut aufgebaut, so wird die Druckkraft im Steuerraum 40, zusammen mit der Federkraft von Feder 66, die Düsennadel 26 rasch schliessen können. Damit wird die Einspritzung rasch unterbrochen, was sich wiederum günstig auf die motorischen Betriebswerte auswirkt.

Der somit beschriebene Verlauf der Düsennadelbewegung während der Einspritzung wird in Figur 4 mit dem Verlauf B dargestellt.

In Figur 4 wird im oberen Diagramm der zeitliche Verlauf des Pilotnadelhubes P nach Erregung des Elektromagnets 46 gezeigt. Die Pilotnadel 44 durchläuft rasch ihren Hub bis zum Anschlag auf der Seite des Elektromagnets und bleibt dann offen, bis eine Zeit von ungefähr einer Millisekunde verstrichen ist. Zu diesem Zeitpunkt wird der Stromimpuls (nicht gezeigt) unterbrochen, und die Pilotnadel 44 wird von der Steuerfeder 50 rasch auf ihren Sitz am Ausgang der Drosselbohrung 42 zurückgeschoben.

Im unteren Diagramm von Figur 4 werden die Verläufe A und B der Düsennadelbewegung, wie weiter oben beschrieben, gezeigt. Beim Verlauf A durchläuft die Düsennadel 26 den ersten Hub H1, der in diesem Diagramm 10% des maximalen Düsennadelhubes entspricht, welcher sich durch Addition der beiden Hübe H1 + H2 ergibt. Dieser Wert von 10% ist ein Richtwert. Je nach der spezifischen motorischen Anwendung kann der erste Hub H1 im Vergleich zum zweiten Hub H2 unterschiedlich gross sein.

Der Verlauf B weist nach dem Durchlaufen des ersten Hubes H1 eine Stufe S auf. Diese Stufe ergibt sich aus der Tatsache, dass die Düsennadel 26 beim Berühren der Anschlagfläche 68b mit der Anschlagfläche 68a zunächst abgebremst wird. Anschliessend muss die Düsennadel 26 zusammen mit dem Stempel 62, dem Anschlagstück 68 und dem unteren Teil der Feder 66 erneut beschleunigt werden.

Diese Stufe S ist in bezug auf die Verbrennung im Motor nicht von Nachteil. Im Gegenteil, sie kann bei gewissen Anwendungen zu einer Verbesserung der Verbrennung und der dazugehörigen Lärm- und Abgasemissionen des Motors führen. Je nachdem, wie gross die Massen der Düsennadel 26 und des Nadelstempels 62, sowie des Hubanschlagelementes 68 sind, und je nachdem wie rasch und wie gross die Druckabsenkung im Steuerraum 40 stattfindet, wird die eben erwähnte Stufe S mehr oder minder ausgeprägt sein. In gewissen Fällen kann diese Stufe S sehr kurz sein, so dass sich der Uebergang vom ersten Hub H1 in den zweiten Hub H2 lediglich als ein Knick in der Oeffnungsbewegung der Düsennadel 26 bemerkbar macht. Je nach dem Betriebsdruck des Brennstoffeinspritzventils 10 ist die Steigung oder Oeffnungsgeschwindigkeit des zweiten Hubes H2 gleich Null (= Verlauf A), gleich einem Verlauf zwischen A und B oder gleich einem Verlauf wie bei B (siehe Figur 4).

Nach der besagten Stufe bewegt sich die Düsennadel 26 zusammen mit dem Stempel 62, dem Anschlagstück 68 und dem unteren Teil der Feder 66 weiter und durchläuft den zweiten Hub H2 bis zum Erreichen des zweiten, definitiven Hubanschlages 68d des Ventilgehäuses 16. Der somit insgesamt zurückgelegte Hub der Düsennadel 26 entspricht der Summe der beiden Teilhübe H1 + H2.

Ein weiterer Vorteil der vorliegenden Erfindung ist, zusätzlich zum Erzielen der Verläufe A bei niedrigem und B beim höchstem Betriebsdruck des Brennstoffeinspritzventils 10 die Tatsache, dass die zwischen A und B bei unterschiedlichen Betriebsdrücken liegenden Verläufe der Düsennadel-Oeffnungsbewegung des zweiten Hubes H2 wesentlich flexibler und exakter realisiert werden können, als bei den bereits bekannten Brennstoffeinspritzventilen dieser Art (wie zum Beispiel jene der EP-A-0 228 578 oder der EP-A-0 262 539).

Bei der vorliegenden Erfindung kann je nach Betriebsdruck die Oeffnungsgeschwindigkeit des zweiten Hubes H2 der Düsennadel 26 jeden beliebigen Wert zwischen den Verläufen A oder B annehmen. Dies ist der Fall, da die Düsennadel 26 bereits bei niedrigem Betriebsdruck (z.B. 200 bar) den ersten Hub H1 ausgeführt hat und der Brennstoffdruck die Sitzfläche 24a, und damit die Spitze der Düsennadel 26 beaufschlägt. In diesem Zustand sind die hydraulischen Druckkräfte stabil, welche von der Seite der Düsenspitze 24 auf die Düsennadel 26 und von der Seite des Steuerraumes 40 auf den Stempel 62 einwirken. Es ist deshalb möglich, jede beliebige Oeffnungsgeschwindigkeit des zweiten Hubes H2 der Düsennadel 26 stabil und reproduzierbar zu erzielen.

Bei den bereits bekannten Lösungen wo ohne dazwischenliegenden Hubanschlag nur ein Hub zurückgelegt wird, muss der Druck im Steuerraum bei bereits recht hohem Betriebsdruck des Brennstoffeinspritzventils stark abgesenkt werden, um die Kraft der Schliessfeder und die fehlende Druckkraft des noch geschlossenen Ventils auszugleichen. Oeffnet nun die Düsennadel und wird die hydraulische Sitzkraft unter der Düsenspitze wirksam, so durchläuft die Düsennadel ihren Hub sehr rasch, und eine Steuerung der Oeffnungsgeschwindigkeit ist nicht möglich.

Es ist ferner zu beachten, dass der Brennstoffdruck, bei welchem die Düsennadel 26 in der Lage ist, das Hubanschlagelement 68 um den zweiten Hub H2 zu bewegen, je nach der spezifischen Anwendung unterschiedlich hoch sein kann (z.B. 200, 300, 400 oder 500 bar). Dies wird durch die spezifische Abstimmung der Steuerelemente (z.B. der Kraft der Feder 66) erzielt.

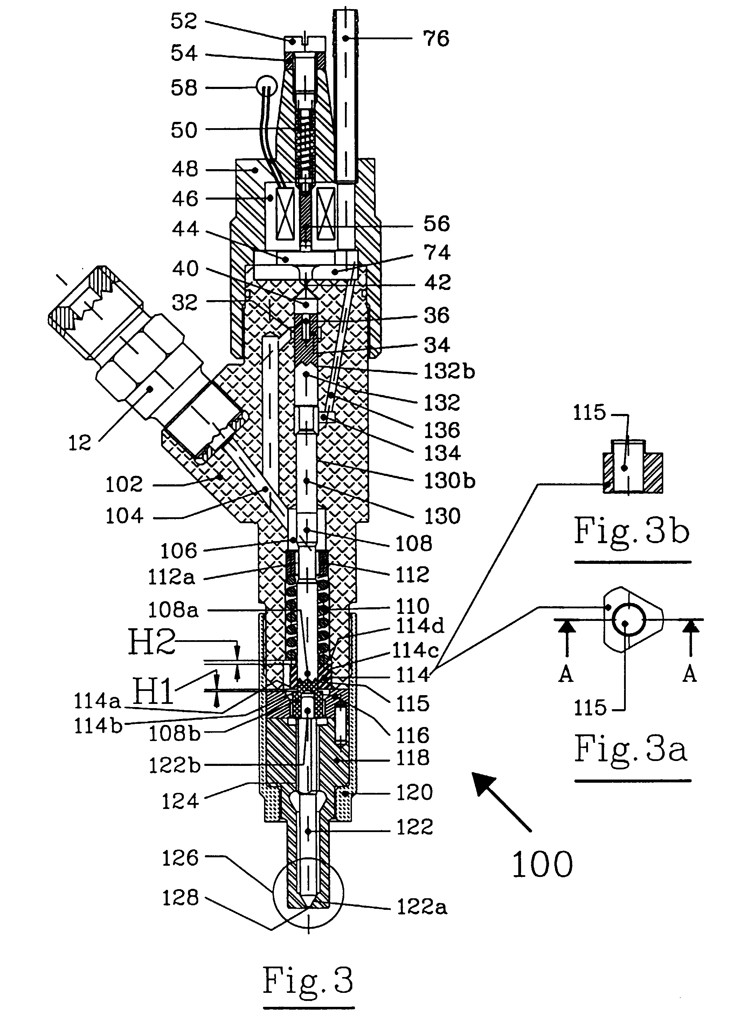

Figur 3 zeigt eine axiale Schnittzeichnung einer zweiten Ausführung eines Brennstoffeinspritzventils 100, gemäss der vorliegenden Erfindung. Die Elemente der Brennstoffeinspritzventile 10 und 100, die gleich sind, wurden mit den gleichen Zahlen numeriert.

Der unter Druck stehende Brennstoff gelangt über den Zufuhrstutzen 12 und eine Bohrung 104 ins Ventilgehäuse 102.

Die Bohrung 104 ist mit einer auf der Längsachse des Brennstoffeinspritzventils 100 angebrachten Bohrung 106 verbunden. In dieser Bohrung 106 befinden sich ein Zwischenstück des Nadelstempels 108, eine Feder 110, eine Federscheibe 112 und ein Hubanschlagelement 114.

Eine Zwischenplatte 116 befindet sich zwischen dem unteren Ende des Ventilgehäuses 102 und der Düsenspitze 118. Die Düsenspitze 118 und die Zwischenplatte 116 werden mittels einer Ueberwurfmutter 120 auf dichte Weise an das Ventilgehäuse 102 verschraubt. Die Düsennadel 122 wird in der Düsenspitze 118 mittels einer Düsennadelführung 124 geführt. Die Düsenspitze 118 und die Düsennadel 122 weisen eine Zerstäuberdüse 126 mit einem gemeinsamen Ventilsitz 122a und einer einzigen Einspritzbohrung 128 auf. Auch diese Anordnung der Zerstäuberdüse 126 ermöglicht eine optimale Ausnützung der Eigenschaften der vorliegenden Erfindung, wie die Zerstäuberdüse des Brennstoffeinspritzventils 10.

Wie in Figur 3 gezeigt, wird der untere Teil 108b des Nadelstempels 108 mit der Verlängerung 122b der Düsennadel 122 mittels eines Presssitzes verbunden. Im Unterschied zum Brennstoffeinspritzventil 10 ist hier eine feste mechanische Verbindung zwischen dem Nadelstempel 108 und der Düsennadel 122 notwendig, da sonst die Düsennadel 122 nicht öffnen würde. Eine alternative Ausführung wäre die, dass beide Teile miteinander verschweisst oder hartgelötet würden oder, dass man sowohl die Düsennadel 122 als auch den Nadelstempel 108 aus einem Werkstück fertigt.

In einer weiteren, nicht näher gezeigten, alternativen Variante, könnte die Platte 116 weggelassen werden und das Ventilgehäuse 102 bis zur Düsenspitze 118 ausgeführt werden.

Die Ausführung des Brennstoffeinspritzventils 100 mit dem Raum 106, welcher unter hohem Druck steht, weist gegenüber dem Brennstoffeinspritzventil 10, gemäss den Figuren 1 und 2, den Vorteil auf, dass der untere Teil des Brennstoffeinspritzventils 100 wesentlich dünner gestaltet werden kann als es beim Brennstoffeinspritzventil 10 möglich ist, da keine Brennstoffzufuhrbohrung 14 seitlich zur Brennstoffeinspritzventillängsachse vorhanden sein muss.

Beim Brenstoffeinspritzventil 100 werden sämtliche Elemente im Innern der Bohrung 106 sowie im Innern der Düsenspitze 118 und der Platte 116 so ausgeführt, dass eine hydraulisch widerstandslose Verbindung zwischen dem Ende der Bohrung 104 und der Zerstäuberdüse 126 besteht. Dies wird realisiert mittels einem Durchgang 112a zwischen der Federscheibe 112 und dem Nadelstempel 108 sowie mit mehreren (hier je drei) Anschliffen, welche am Umfang des Hubanschlagelementes 114 und der Düsennadelführung 124 angebracht sind. Zur besseren Illustration der Ausführung dieser Anschliffe wird die Ansicht von oben des Hubanschlagelementes 114 in Figur 3a gezeigt. Ferner wird in Figur 3b ein Schnitt A-A des Hubanschlagelementes 114, gemäss Figur 3a (gleich wie im Brennstoffeinspritzventil 100) vergrössert dargestellt. Die hydraulische Durchflussfläche des Durchgangs 112a und der Anschliffe ist wesentlich grösser als die Durchflussfläche der Einspritzbohrung 128. Weitere, alternative Ausführungen sind ebenfalls realisierbar.

Der Stempel 108 weist an seinem oberen Ende einen integralen Stempelkolben 130 mit einer engen Gleitpassung 130b zusammen mit dem Ventilgehäuse 102 auf. Ferner ist zu beachten, dass Düsennadel 122. Stempel 108, Nadelhubanschlag 114, Feder 110 und Federscheibe 112 von der Unterseite in das Brennstoffeinspritzventil 100 eingebaut werden können. Dies ist eine recht einfache Anordnung.

Ein zweiter Nadelkolben 132 wird im Innern des Ventilgehäuses 102 mit einer engen Gleitpassung 132b geführt. Der Kolben 132 drückt nun auf das obere Ende des Stempelkolbens 130. Der Durchmesser des zweiten Nadelkolbens 132 kann wahlweise gleich gross sein wie der Durchmesser des Stempelkolbens 130 oder, wie in Figur 3 gezeigt wird, leicht grösser sein. Diese Tatsache kann beim Brennstoffeinspritzventil 10 durch Wahl der Durchmesser der Kolben 26b und 38 ebenfalls berücksichtigt werden.

Zwischen dem Kolben 132 und dem Kolben 130 wird ein Raum 134 gebildet, der einen geringen Druckpegel aufweist. Eine Entlastungsbohrung 136 verbindet diesen Raum 134 mit dem Raum 74. Die Bedeutung dieses Raumes 134 und dieser Bohrung 136 ist dieselbe wie jene des Raumes 70 und der Bohrung 72 des Brennstoffeinspritzventils 10.

Die Funktionsweise des Brennstoffeinspritzventils 100 ist sehr ähnlich wie jene des Brennstoffeinspritzventils 10. Es muss beachtet werden, dass das Ende der Düsennadelführung 124 genau mit dem oberen Ende der Düsenspitze 118 bei der Kontaktfläche mit der Zwischenplatte 116 übereinstimmt. Der untere Teil 108b des Nadelstempels 108 ist nun etwas kürzer als die Zwischenplatte 116 und zwar genau um den Betrag des ersten Hubes H1.

Bei niedrigem (z.B. 200 bar) und mittlerem (z.B. 400 bar) Druckpegel werden sich also die Düsennadel 122 und der Nadelstempel 108 sowie der Kolben 132 nur um den ersten Hub H1 bewegen, solange bis die Anschlagfläche 114b mit der Anschlagfläche 114a des Anschlagstückes 114 in Kontakt kommt. Damit wird bei niedrigem bis mittlerem Einsspritzdruckpegel nur der erste Hub H1 zurückgelegt, da die hydraulische Oeffnungskraft oder Steuerkraft nicht ausreicht, um die Kraft der Feder 110 zu überwinden.

Bei hohem Druckpegel (z.B. 1000 bar) im Brennstoffeinspritzventil 100 wird die Düsennadel 122 samt Stempel 108, das Anschlagstück 114 weiter bewegen, bis die Anschlagfläche 114c des Anschlagstückes 114 die dazugehörige Fläche 114d im Gehäuse 102 berühren wird, womit der zweite Hub H2 zurückgelegt wird.

Bei den Konstruktionen der Brennstoffeinspritzventile 10 und 100 wird die Bewegung des ersten Hubes H1 der Düsennadeln 26 und 122 nur von hydraulischen Kräften gesteuert. Die hydraulische Druckkraft im Steuerraum 40 sorgt dafür, dass die Düsennadel 26 oder 122 den Sitz 24a oder 122a auf dichte Weise abschliesst, wenn keine Einspritzung stattfinden soll. Dies ist während dem Motorbetrieb immer der Fall. Nach dem Abstellen des Motors, sinkt der hydraulische Druck in den Brennstoffeinspritzventilen nach einiger Zeit auf Umgebungsdruck ab (= ca. 1 bar).

Vor dem erneuten Aufstarten des Motors muss ein geringer hydraulischer Druck von ca. 50 bar in den Einspritzventilen erzeugt werden, da sonst der Kompressionsdruck im (oder in den) Motorzylinder(n) die Düsennadel(n) 26 oder 122 um den ersten Hub H1 öffnen könnte. Wegen der möglichen Verunreinigung des Sitzes 24a oder 122a würde unter Umständen die geforderte Dichtheit beeinträchtigt.

Ist bei bestimmten Anwendungen die Erzeugung dieses Mindestdruckes vor dem Motorstart nicht möglich, so ist es vorteilhaft, die Düsennadel 26 oder 122 der Brennstoffeinspritzventile 10 oder 100 mechanisch zuzuhalten. Dies könnte beispielsweise mit einer auf die Düsennadel 26 oder 122 einwirkenden schwachen Feder geschehen, welche eine Schliesskraft entsprechend einem Druck von ca. 50 bar auf die Fläche des Sitzes 24a oder 122a erzeugt. Eine solche Feder ist ca. 3 bis 10 mal schwächer als die Hubanschlagfeder 66 oder 110 jedes Brennstoffeinspritzventils 10 oder 100 und beeinträchtigt deshalb die Funktion der Brennstoffeinspritzventile 10 und 100 der vorliegenden Erfindung nicht.

## Patentansprüche

1. Brennstoffeinspritzventil zur intermittierenden Brennstoffzufuhr in den Brennraum einer Verbrennungskraftmaschine, mit einem Gehäuse (16; 102), mit einem Ventilsitz (24a; 122a) und mindestens einer Einspritzöffnung (30; 128), mit einem länglichen, zum Zusammenwirken mit dem Ventilsitz (24a; 122a) und zum Verschliessen der Einspritzöffnung (30; 128), bestimmten, im Gehäuse (16; 102) verschiebbaren Einspritzventilglied (26, 62; 122, 108, 132) das durch den Brennstoffdruck vorübergehend in axialer Richtung bewegbar ist, um vom Ventilsitz (24a; 122a) abgehoben zu werden und die Einspritzöffnung (30; 128) zu öffnen, mit einem im Gehäuse (16; 102) vorhandenen Steuerraum (40), wobei der Brennstoffdruck im Steuerraum (40) auf das Einspritzventilglied (26, 62; 122, 108, 132) einwirkt und letzteres an den Ventilsitz (24a; 122a) andrückt, und der Brennstoffdruck im Steuerraum (40) mittels eines elektromagnetisch betätigbaren Pilotventils (44) und mittels Steueröffnungen (34, 42) rasch abgesenkt und rasch wieder aufgebaut werden kann, um eine momentane axiale Bewegung des Einspritzventilgliedes (26, 62; 122, 108, 132) zuzulassen, und mit einem im Gehäuse (16; 102) gegen die Kraft einer Feder (66; 110) verschiebbar angeordneten Anschlagelement (68; 114), gegen das sich bei einer Absenkung des Brennstoffdruckes im Steuerraum (40) das Einspritzventilglied (26, 62; 122, 108, 132) zuerst um eine erste Wegstrecke (H1) bis zum Anschlag bewegt, dadurch gekennzeichnet, dass die Kraft der Feder (66; 110) so bemessen ist, dass bei niedrigem bis mittlerem Einspritzdruckpegel die zur Bewegung des Einspritzventilgliedes (26, 62; 122, 108, 132) auf letzteres einwirkenden hydraulischen Steuerkräfte kleiner sind als die Kraft der Feder (66; 110) und das Anschlagelement (68; 114) während eines gesamten Einspritzvorganges nicht zu bewegen vermögen und dass hingegen bei hohem Einspritzdruckpegel nach dem Ueberschreiten eines bestimmten Einspritzdruckpegels das Einspritzventilglied (26, 62; 122, 108, 132) zusammen mit dem Anschlagelement (68; 114) von den hydraulischen Steuerkräften weiter um eine zweite Wegstrecke (H2), die durch einen gehäusefesten Anschlag (68d; 114d) für das Anschlagelement (68; 114) begrenzt ist, bewegt wird, um so dem Einspritzventilglied (26, 62; 122, 108, 132) während eines gesamten Einspritzvorganges die Zurücklegung des gesamten Oeffnungsweges, der der Summe der ersten und der zweiten Wegstrecke (H1 + H2) entspricht, vom Ventilsitz (24a; 122a) weg zu ermöglichen.

2. Brennstoffeinspritzventil nach Anspruch 1 dadurch gekennzeichnet, dass das Anschlagelement (68; 114) eine auf der Längsachse des Einspritzventilgliedes (26, 62; 122, 108, 132) angeordnete Längsbohrung (69; 115) aufweist, in der sich das Einspritzventilglied (26, 62; 122, 108, 132) um die erste Wegstrecke (H1) bewegen kann, ohne dass sich das Anschlagelement (68; 114) bewegt.

3. Brennstoffeinspritzventil nach Anspruch 1, dadurch gekennzeichnet, dass das Einspritzventilglied (26, 62; 122, 108, 132) aus mindestens zwei Teilstücken (26; 108, 122) und (62; 132) besteht.

4. Brennstoffeinspritzventil nach Anspruch 1 oder 3, dadurch gekennzeichnet, dass sich ein Teilstück (62) des Einspritzventilgliedes (26, 62) zusammen mit dem Anschlagelement (68) und der Feder (66) in einer Längsbohrung (70) des Gehäuses (16) befinden, in welcher ein geringer Druckpegel vorhanden ist.

5. Brennstoffeinspritzventil nach Anspruch 1 oder 3, dadurch gekennzeichnet, dass sich ein Teilstück (108, 122) des Einspritzventilgliedes (122, 108, 132), zusammen mit dem Anschlagelement (114) und der Feder (110), in einer Längsbohrung (106) im Gehäuse (102) befinden, in welcher ein Druck gleich dem Einspritzdruck herrscht.

6. Brennstoffeinspritzventil nach den Ansprüchen 3 und 4, dadurch gekennzeichnet, dass eine Verlängerung (62a) des einen Teilstückes (62) des Einspritzventilgliedes (26, 62) auf ein zweites Teilstück (26a) des Einspritzventilgliedes (26, 62) drückt.

7. Brennstoffeinspritzventil nach den Ansprüchen 3 und 5, dadurch gekennzeichnet, dass ein Teilstück (108) des Einspritzventilgliedes (122, 108) fest mit einem weiteren Teilstück (122) des Einspritzventilgliedes (122, 108) verbunden ist.

8. Brennstoffeinspritzventil nach Anspruch 1, dadurch gekennzeichnet, dass die erste Wegstrecke (H1) der Längendifferenz zwischen einer Anschlagfläche (68b; 114b)) des Einspritzventilgliedes (26, 62; 122, 108, 132) und einer Endfläche (68a; 114a) eines Führungselementes (24) oder einer Zwischenplatte (116) entspricht, auf dem bzw. der das Anschlagelement (68; 114) unter der Wirkung der Feder (66; 100) anliegt.

9. Brennstoffeinspritzventil nach Anspruch 8, dadurch gekennzeichnet, dass die erste Wegstrecke (H1) der Längendifferenz zwischen der Länge einer Zwischenplatte (116) und der Länge eines Teilstückes (108b) des Einspritzventilgliedes (122, 108) entspricht.

10. Brennstoffeinspritzventil nach Anspruch 1, dadurch gekennzeichnet, dass die zweite Wegstrecke (H2) dem Abstand zwischen einer Anschlagfläche (68c; 114c) des Anschlagelementes (68; 114) und einer Anschlagfläche (68d; 114d) im Gehäuse (16; 102) entspricht, wenn sich das Anschlagelement (68; 114) unter der Wirkung der Feder (66; 110) in der Ruhestellung befindet.

11. Brennstoffeinspritzventil nach Anspruch 10, dadurch gekennzeichnet, dass sich zwischen der Anschlagfläche (68d) des Gehäuses (16) und einer Endfläche (68a) eines Führungselementes (24) des Einspritzventilgliedes (26, 62) eine Zwischenplatte (20) befindet, die Zwischenplatte (20) von einer Ueberwurfmutter (60) zusammen mit dem Führungselement (24) auf dichte Weise an die Anschlagfläche (68d) des Gehäuses (16) gedrückt wird. und die zweite Wegstrecke (H2) der Längendifferenz zwischen der Länge der Zwischenplatte (20) und der Länge des Anschlagstückes (68) entspricht.

12. Brennstoffeinspritzventil nach Anspruch 5, dadurch gekennzeichnet, dass das Einspritzventilglied (122, 108, 132) ein weiteres, zweites Teilstück (132) aufweist, welches in einer ersten Führung (132b) geführt ist und weiter ein drittes Teilstück (130) aufweist, welches in einer weiteren, zweiten Führung (130b) geführt ist, wobei zwischen diesen beiden Führungen (130b und 132b) ein im wesentlichen druckloser Raum (134) vorhanden ist und das zweite Teilstück (132) vom Druck im Steuerraum (40) auf das dritte Teilstück (130) gedrückt wird.

13. Brennstoffeinspritzventil nach Anspruch 1, dadurch gekennzeichnet, dass das Einspritzventilglied (26, 62; 122, 108, 132) ein erstes, von Druck im Steuerraum (40) beaufschlagtes Kolbenelement (38; 132) aufweist, dessen Führungsdurchmesser (38a; 132b) grösser ist, als der Führungsdurchmesser (26b; 130b) eines zweiten Kolbenelementes (26; 130) des Einspritzventilgliedes (26, 62; 122, 108, 132).

## Claims

1. Fuel injection valve for intermittent fuel supply into the combustion space of an internal combustion engine, having a housing (16; 102), having a valve seat (24a; 122a) and at least one injection opening (30; 128), having a longitudinal injection valve element (26, 62; 122, 108, 132), which is intended for interacting with the valve seat (24a; 122a) and for closing the injection opening (30; 128), is displaceable in the housing (16; 102) and is temporarily movable in the axial direction by means of the fuel pressure in order to be lifted from the valve seat (24a; 122a) and in order to open the injection opening (30; 128), having a control space (40) present in the housing (16; 102), the fuel pressure in the control space (40) acting on the injection valve element (26, 62; 122, 108, 132) and pressing the latter onto the valve seat (24a; 122a) and it being possible to drop rapidly and build up again rapidly the fuel pressure in the control space (40) by means of an electromagnetically actuated pilot valve (44) and by means of control openings (34, 42) in order to permit an instantaneous axial motion of the injection valve element (26, 62; 122, 108, 132), and having a stop element (68; 114) arranged in the housing (16; 102) so that it can be displaced against the force of a spring (66; 110), towards which stop element, when the fuel pressure in the control space (40) drops, the injection valve element (26, 62; 122, 108, 132) first moves by the amount of a first path length (H1), as far as contact with it, characterized in that the force of the spring (66; 110) is dimensioned in such a way that, in the case of low to medium injection pressure level, the hydraulic control forces which act on the injection valve element (26, 62; 122, 108, 132) so as to move it are smaller than the force of the spring (66; 110) and are incapable of moving the stop element (68; 114) during an entire injection procedure, and in that, in contrast, at high injection pressure level, after a certain injection pressure level has been exceeded, the injection valve element (26, 62; 122, 108, 132) is moved further, together with the stop element (68; 114), by a second path length (H2), which is limited by a stop (68d; 114d) for the stop element (68; 114) fixed to the housing, by the hydraulic control forces in order, by this means, to permit the injection valve element (26, 62; 122, 108, 132) to traverse, during an entire injection procedure, the total opening path, which corresponds to the sum of the first and the second path lengths (H1+H2), away from the valve seat (24a; 122a).

2. Fuel injection valve according to Claim 1, characterized in that the stop element (68; 114) has a longitudinal hole (69; 115), which is arranged on the longitudinal axis of the injection valve element (26, 62; 122, 108, 132) and in which the injection valve element (26, 62; 122, 108, 132) can move by the first path length (H1) without the stop element (68; 114) moving.

3. Fuel injection valve according to Claiml, characterized in that the injection valve element (26, 62; 122, 108, 132) consists of at least two partial pieces (26; 108, 122) and (62; 132).

4. Fuel injection valve according to Claim 1 or 3, characterized in that one partial piece (62) of the injection valve element (26, 62), together with the stop element (68) and the spring (66), is located in a longitudinal hole (70), of the housing (16), in which there is a low pressure level.

5. Fuel injection valve according to Claim 1 or 3, characterized in that a partial piece (108, 122) of the injection valve element (122, 108, 132), together with the stop element (114) and the spring (110), is located in a longitudinal hole (106), in the housing (102), in which there is a pressure equal to the injection pressure.

6. Fuel injection valve according to Claims 3 and 4, characterized in that an extension (62a) of one partial piece (62) of the injection valve element (26, 62) presses on a second partial piece (26a) of the injection valve element (26, 62).

7. Fuel injection valve according to Claims 3 and 5, characterized in that one partial piece (108) of the injection valve element (122, 108) is permanently connected to a further partial piece (122) of the injection valve element (122, 108).

8. Fuel injection valve according to Claim 1, characterized in that the first path length (H1) corresponds to the length difference between a stop surface (68b; 114b) of the injection valve element (26, 62; 122, 108, 132) and an end surface (68a; 114a) of a guide element (24) or of an intermediate plate (116) with which the stop element (68; 114) is in contact under the action of the spring (66; 100).

9. Fuel injection valve according to Claim 8, characterized in that the first path length (H1) corresponds to the length difference between the length of an intermediate plate (116) and the length of a partial piece (108b) of the injection valve element (122, 108).

10. Fuel injection valve according to Claim 1, characterized in that the second path length (H2) corresponds to the distance between a stop surface (68c; 114c) of the stop element (68; 114) and a stop surface (68d; 114d) in the housing (16; 102) when the stop ele^_ment (68; 114) is in the rest position under the action of the spring (66; 110).

11. Fuel injection valve according to Claim 10, characterized in that an intermediate plate (20) is located between the stop surface (68d) of the housing (16) and an end surface (68a) of a guide element (24) of the injection valve element (26; 62), in that the intermediate plate (20) is pressed, together with the guide element (24), in a sealed manner onto the stop surface (68d) of the housing (16) by a union nut (60) and in that the second path length (H2) corresponds to the length difference between the length of the intermediate plate (20) and the length of the stop piece (68).

12. Fuel injection valve according to Claim 5, characterized in that the injection valve element (122, 108, 132) has a further, second partial piece (132) which is guided in a first guide (132b) and, in addition, has a third partial piece (130) which is guided in a further, second guide (130b), there being an essentially unpressurized space (134) between these two guides (130b and 132b) and the second partial piece (132) being pressed onto the third partial piece (130) by the pressure in the control space (40).

13. Fuel injection valve according to Claim 1, characterized in that the injection valve element (26, 62; 122, 108, 132) has a first piston element (38; 132), which is acted on by the pressure in the control space (40) and whose guide diameter (38a; 132b) is larger than the guide diameter (26b; 130b) of a second piston element (26; 130) of the injection valve element (26, 62; 122, 108, 132).

## Revendications

1. Soupape d'injection de combustible pour l'amenée intermittente de combustible dans la chambre de combustion d'un moteur à combustion interne, comprenant un boîtier (16 ; 102), un siège de soupape (24a ; 122a) et au moins une ouverture d'injection (30 ; 128), comprenant un opercule de soupape d'injection (26, 62 ; 122, 108, 132) allongé et mobile dans le boîtier (16 ; 52), destiné à coopérer avec le siège de soupape (24a ; 122a) et à obturer l'ouverture d'injection (30 ; 128), ledit opercule étant temporairement déplaçable sous la pression du combustible en direction axiale afin d'être soulevé du siège de soupape (24a ; 122a) et d'ouvrir l'ouverture d'injection (30 ; 128), comprenant une chambre de commande (40) prévue dans le boîtier (16 ; 102), la pression du combustible dans la chambre de commande (40) agissant sur l'opercule de soupape d'injection (26, 62 ; 122, 108, 132) et pressant ce dernier contre le siège de soupape (24a, ; 122a), et la pression du combustible dans la chambre de commande (40) pouvant être rapidement abaissée et à nouveau rapidement augmentée au moyen d'une valve pilote (44) à actionnement électromagnétique et au moyen d'ouvertures de commande (34, 42), pour permettre un déplacement axial momentané de l'opercule de soupape d'injection (26, 62 ; 122, 108, 132), et comprenant un élément de butée (68 ; 114) agencé en déplacement dans le boîtier (106 ; 102) à l'encontre de la force d'un ressort (66 ; 110), contre lequel se déplace l'opercule de soupape (26, 62 ; 122, 108, 132) lors d'une diminution de la pression de combustible dans la chambre de commande (40), tout d'abord sur un premier trajet (H1), caractérisée en ce que la force du ressort (66 ; 110) est choisie de telle manière que dans le cas où le niveau de la pression d'injection est faible à moyen, les forces de commande hydrauliques qui agissent sur l'opercule de soupape (26, 62 ; 122, 108, 132) pour le déplacement de ce dernier sont plus petites de la force du ressort (66 ; 110), et n'ont pas pour effet de déplacer l'élément de butée (68 ; 114) pendant la totalité d'un processus d'injection, et au contraire, dans le cas où le niveau de la pression d'injection est élevé, après dépassement d'un certain niveau de pression d'injection, l'opercule de soupape (26, 62 ; 122, 108, 132) est déplacé conjointement avec l'élément de butée (68 ; 114) par les forces de commande hydrauliques sur un second trajet supplémentaire (H2), qui est limité par une butée (68d ; 114d) solidaire du boîtier pour l'élément de butée (68 ; 114), afin de permettre ainsi à l'opercule de soupape (26, 62 ; 122, 108, 132) pendant la totalité d'un processus d'injection de parcourir la totalité de la course d'ouverture, en éloignement du siège de soupape (24a ; 122a), qui correspond à la somme du premier et du second trajet (H1+ H2).

2. Soupape d'injection de combustible selon la revendication 1, caractérisée en ce que l'élément de butée (68 ; 114) comprend un perçage longitudinal (69 ; 115) agencé sur l'axe longitudinal de l'opercule de soupape (26, 62 ; 122, 108, 132), dans lequel peut se déplacer l'opercule de soupape (26, 62 ; 122, 108, 132) sur le premier trajet (H1), sans que l'élément de butée (68 ; 114) se déplace.

3. Soupape d'injection de combustible selon la revendication 1, caractérisée en ce que l'opercule de soupape (26, 62 ; 122, 108, 132) est constitué par au moins deux composants partiels (26 ; 108, 122) et (62 ; 132).

4. Soupape d'injection de combustible selon l'une ou l'autre des revendications 1 et 3, caractérisée en ce qu'un composant partiel (62) de l'opercule de soupape (26, 62) se trouve conjointement avec l'élément de butée (68) et le ressort (66) dans un perçage longitudinal (70) du boîtier (16), dans lequel règne un faible niveau de pression.

5. Soupape d'injection de combustible selon l'une ou l'autre des revendications 1 et 3, caractérisée en ce qu'un composant partiel (108, 122) de l'opercule de soupape (122, 108, 132) se trouve conjointement avec l'élément de butée (114) et le ressort (110) dans un perçage longitudinal (106) du boîtier (102), dans lequel règne une pression égale à la pression d'injection.

6. Soupape d'injection de combustible selon les revendications 3 et 4, caractérisée en ce qu'un prolongement (62a) de l'un des composants partiels (62) de l'opercule de soupape (26, 62) appuie contre un second composant partiel (26a) de l'opercule de soupape (26, 62).

7. Soupape d'injection de combustible selon les revendications 3 et 5, caractérisée en ce qu'un composant partiel (108) de l'opercule de soupape (122, 108) est fermement relié à un autre composant partiel (122) de l'opercule de soupape (122, 108).

8. Soupape d'injection de combustible selon la revendication 1, caractérisée en ce que le premier trajet (H1) correspond à la différence de longueur entre une surface de butée (68b ; 114b) de l'opercule de soupape (26, 62 ; 122, 108, 132) et une surface terminale (68a ; 114a) d'un élément de guidage (24) ou d'une plaque intermédiaire (116), sur lequel ou sur laquelle est appliqué l'élément de butée (68 ; 114) sous l'action du ressort (66 ; 100).

9. Soupape d'injection de combustible selon la revendication 8, caractérisée en ce que le premier trajet (H1) correspond à la différence de longueurs entre la longueur d'une plaque intermédiaire (116) et la longueur d'un composant partiel (108b) de l'opercule de soupape (122, 108).

10. Soupape d'injection de combustible selon la revendication 1, caractérisée en ce que le second trajet (H2) correspond à la distance entre une surface de butée (68c ; 114c) de l'élément de butée (68 ; 114) et une surface de butée (68d ; 114d) dans le boîtier (16 ; 102) lorsque l'élément de butée (68 ; 114) se trouve dans la position de repos sous l'action du ressort (68 ; 110).

11. Soupape d'injection de combustible selon la revendication 10, caractérisée en ce qu'il est prévu une plaque intermédiaire (20) entre la surface de butée (68d) du boîtier (16) et une surface terminale (68a) d'un élément, de guidage (24) de l'opercule de soupape (26, 62), ladite plaque intermédiaire (20) étant repoussée par un écrou-calotte (60) conjointement avec l'élément de guidage (24) de façon étanche contre la surface de butée (68d) du boîtier (16), et en ce que le second trajet (H2) correspond à la différence de longueurs entre la longueur de la plaque intermédiaire (20) et la longueur de l'élément de butée (68).

12. Soupape d'injection de combustible selon la revendication 5, caractérisée en ce que l'opercule de soupape (122, 108, 132) comprend un second composant partiel (132), lequel est guidé dans un premier guidage (132b), et un troisième composant partiel (130), lequel est guidé dans un second guidage (130b), en ce qu'il existe entre ces deux guidages (130b et 132b) une chambre (134) sensiblement sans pression, et en ce que le second composant partiel (132) est repoussé vers le troisième composant partiel (130) par la pression dans la chambre de commande (40).

13. Soupape d'injection de combustible selon la revendication 1, caractérisée en ce que l'opercule de soupape (26, 62 ; 122, 108, 132) comprend un premier élément de piston (38 ; 132) sollicité par la pression dans la chambre de commande (40), dont le diamètre de guidage (38a ; 132b) est supérieur au diamètre de guidage (26b ; 130b) d'un second élément de piston (26 ; 130) de l'opercule de soupape (26, 62 ; 122, 108, 132).
